# FASCICULE DE BREVET EUROPEEN

(11) **EP 4 453 396 B1**
(45) Date de publication et mention de la délivrance du brevet: **11.11.2026**
(21) Numéro de dépôt: 22835685.3
(22) Date de dépôt: 12.12.2022
(51) Int. Cl.: F01P 7/16, B60K 11/02, F01P 5/12

(54) **PROCÉDÉ DE PILOTAGE D'UNE POMPE ÉLECTRIQUE D'UN GROUPE MOTOPROPULSEUR POUR VÉHICULE**
VERFAHREN ZUR STEUERUNG EINER ELEKTRISCHEN PUMPE EINES FAHRZEUGANTRIEBSSTRANGS
METHOD FOR CONTROLLING AN ELECTRIC PUMP IN A VEHICLE POWERTRAIN

(30) Priorité: 22.12.2021 FR 2114293
(43) Date de publication de la demande: 30.10.2024
(73) Titulaire: Horse Powertrain Solutions, S.L.U., 28108 Alcobendas, Madrid (ES)
(72) Inventeur: BEISBARDT, Olivier, 78280 GUYANCOURT (FR); CAILLETON, Louis, 78280 GUYANCOURT (FR); DELAHAYE, Laurent, 91510 LARDY (FR); MERCAY, Patrice, 78280 GUYANCOURT (FR); PONT, Mathieu, 78280 GUYANCOURT (FR)
(74) Mandataire: Elzaburu S.L.P.
(86) Numéro de dépôt international: PCT/EP2022/085387
(87) Numéro de publication internationale: WO 2023/117537

(56) Documents cités:
- GB-A- 2 429 763
- US-A1- 2017 248 065

## Description

### Domaine technique de l'invention

L'invention concerne un procédé de pilotage d'une pompe électrique d'un groupe moto propulseur.

### Etat de la technique antérieure

Un véhicule, en particulier un véhicule automobile, comprend un groupe motopropulseur. Un tel groupe motopropulseur comprend généralement au moins un moteur thermique et/ou au moins un moteur électrique et au moins une boîte de vitesses. Une telle boîte de vitesses est généralement agencée entre le ou les moteurs et au moins un arbre de transmission destiné à transmettre un couple à au moins un moyen en contact avec le sol tel qu'une roue. Une telle boîte de vitesses comprend généralement des pignons engrenant les uns avec les autres et utilise de l'huile pour sa lubrification. Une telle huile de lubrification comprend une plage de températures de fonctionnement au sein de laquelle son pouvoir lubrifiant est optimal.

GB2429763A décrit un système de refroidissement qui extrait la chaleur d'un échangeur de chaleur de gaz d'échappement dans le but de faciliter le chauffage des huiles de transmission et de moteur pendant le démarrage à froid. Cette disposition facilite le réchauffement rapide des lubrifiants, ce qui conduit à une meilleure économie de carburant. Dans des conditions de fonctionnement normales, l'échangeur de chaleur des gaz d'échappement est fermé sous le contrôle d'un module de commande qui commande également une pompe électrique et un ensemble de vannes afin d'optimiser les performances de ce système. Le système comprend également une matrice de chauffage d'habitacle, un échangeur de chaleur d'huile de transmission, un échangeur de chaleur d'huile moteur et des capteurs de température.

US2017248065A1 décrit un système de gestion thermique et un procédé de production et d'utilisation de ce dernier. Un certain nombre de variations peut comprendre un système de gestion thermique ayant un moteur et un système de refroidissement comprenant un circuit de refroidissement et une pompe de liquide de refroidissement, la pompe de liquide de refroidissement étant actionnée par une unité de commande électronique qui fonctionne indépendamment du moteur, et l'unité de commande électronique étant construite et agencée de manière à faire fonctionner la pompe de liquide de refroidissement à une vitesse plus élevée que la vitesse du moteur multipliée par le rapport de poulie moteur pendant le réchauffement.

Seulement, au démarrage d'un groupe motopropulseur, en particulier par temps froid, l'huile de la boîte de vitesses n'atteint la plage de température de fonctionnement optimale qu'au bout d'une certaine durée. En outre, en particulier par temps chaud et/ou à haut régime du groupe motopropulseur et/ou à régime de rotation élevé de la boîte de vitesses, l'huile de la boîte de vitesses dépasse la plage de température de fonctionnement optimale.

Plus précisément, à une température inférieure à une telle plage de températures, l'huile est visqueuse ce qui crée une perte de rendement de la boîte de vitesses engendrant une surconsommation du véhicule en termes d'électricité et/ou de carburant. A l'inverse, à une température supérieure à une telle plage de températures, un film d'huile entre des pignons engrenant ensemble n'est pas suffisamment épais ce qui engendre une usure prématurée des pignons. A terme, une telle usure engendre des bruits anormaux d'une telle boîte de vitesses, voire des dysfonctionnements, voire la casse de pignons ce qui conduit à la détérioration de la boîte de vitesses et la rend inutilisable.

Une telle situation n'est pas acceptable.

### Présentation de l'invention

Le but de l'invention est de fournir un procédé de pilotage d'une pompe électrique d'un groupe motopropulseur remédiant aux inconvénients ci-dessus. En outre l'invention permet de réchauffer la boîte de vitesses afin que l'huile atteigne rapidement la plage de températures optimale.

Pour atteindre cet objectif l'invention porte sur un procédé de pilotage d'une pompe électrique d'un groupe motopropulseur tel que défini ci-dessous, le procédé comprenant une étape d'activation de la pompe électrique pour réchauffer l'élément.

Le procédé comprend une étape d'activation de la pompe électrique pour refroidir l'élément.

Le procédé comprend :
- une étape de mesure de la température de l'élément, notamment de l'huile, par le moyen de mesure,
- une étape de comparaison de la température de l'élément, notamment de l'huile, par rapport à une plage cible de températures, et

en cas de température inférieure ou égale à une valeur seuil inférieure de la plage cible de températures, on met en œuvre l'étape d'activation de la pompe électrique pour réchauffer l'élément,
en cas de température supérieure ou égale à une valeur seuil supérieure de la plage cible de températures, on met en œuvre l'étape d'activation de la pompe électrique pour refroidir l'élément.

L'étape d'activation de la pompe électrique pour réchauffer l'élément comprend une activation à un premier débit de la pompe électrique, notamment un premier débit compris entre 150 l/h et 250 l/h,
et l'étape d'activation de la pompe électrique pour refroidir l'élément comprend une activation à un deuxième débit de la pompe électrique, notamment un deuxième débit compris entre 1100 l/h et 1300 l/h, le deuxième débit étant supérieur au premier débit.

Le groupe motopropulseur, pour véhicule, comprend :
- un composant produisant de la chaleur, le composant étant un moteur thermique ou une première machine électrique,
- un premier circuit comprenant un liquide de refroidissement,
- une pompe électrique agencée dans le premier circuit et étant destinée à faire circuler le liquide de refroidissement pour le refroidissement du composant,
- au moins un organe du composant au travers duquel le liquide de refroidissement est apte à circuler, ledit organe comprenant au moins un échangeur thermique et/ou une vanne EGR, et/ou un turbocompresseur et/ou un volet d'admission et/ou un thermostat et/ou une deuxième machine électrique et/ou un bocal d'expansion,
- un élément fonctionnant avec de l'huile, l'élément étant une boîte de vitesses,
- un moyen de mesure de la température du liquide de refroidissement, notamment au niveau du composant,
- un deuxième circuit comprenant l'huile,
- un moyen de mesure de la température de l'élément ou de l'huile au niveau de l'élément,
le groupe motopropulseur comprenant des moyens matériels et/ou logiciels de gestion du fonctionnement de la pompe électrique, notamment sa mise en rotation et/ou son arrêt et/ou sa vitesse de rotation, tenant compte du besoin en débit de liquide de refroidissement de chacun des organes selon la température mesurée du liquide de refroidissement, afin d'assurer un réchauffage de l'élément.

Le groupe motopropulseur peut comprendre un échangeur entre le premier circuit et le deuxième circuit.

Le premier circuit peut comprendre une vanne agencée au niveau de l'échangeur de sorte à empêcher ou non la circulation du liquide de refroidissement dans l'échangeur.

La pompe électrique peut être maintenue activée ou peut être activée alors que le composant produisant de la chaleur est désactivé.

Durant la phase de montée en température du composant, l'étape d'activation de la pompe électrique pour réchauffer l'élément peut être conditionnée à l'atteinte d'une température seuil prédéterminée, notamment une température seuil du liquide de refroidissement du composant supérieure ou égale à 40 degrés Celsius.

### Présentation des figures

Ces objets, caractéristiques et avantages de la présente invention seront exposés en détail dans la description suivante d'un mode de réalisation et d'un mode d'exécution d'un procédé faite à titre non-limitatif en relation avec les figures jointes parmi lesquelles :
[Fig. 1] La figure 1 est une vue schématique d'un véhicule selon un mode de réalisation.
[Fig. 2] La figure 2 est une vue schématique d'un groupe motopropulseur selon un mode de réalisation.
[Fig. 3] La figure 3 est un schéma bloc d'un mode d'exécution d'un procédé de pilotage d'une pompe électrique du groupe motopropulseur selon un mode de réalisation.
[Fig. 4] La figure 4 est une vue schématique d'un circuit de refroidissement du groupe motopropulseur selon un mode de réalisation.

### Description détaillée

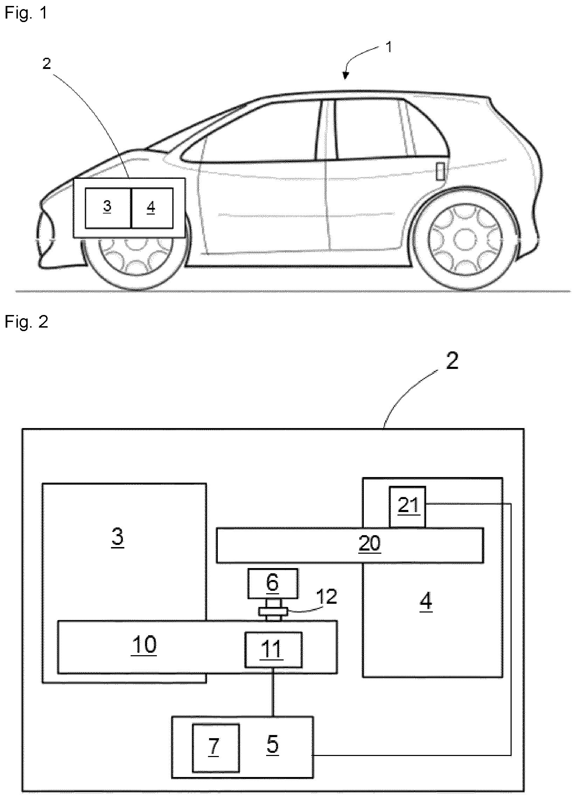

La figure 1 illustre schématiquement un véhicule 1, en particulier un véhicule automobile, selon un mode de réalisation.

Le véhicule comprend un groupe motopropulseur 2.

Le groupe motopropulseur 2 comprend un composant 3 produisant de la chaleur. Par exemple, le composant 3 comprend, ou est, une première machine électrique et/ou un moteur thermique, par exemple de type moteur à combustion interne. Une première machine électrique est par exemple un moteur électrique ou un alternodémarreur. Alternativement, le composant 3 est une batterie.

Le groupe motopropulseur 2 comprend encore un élément 4 fonctionnant avec de l'huile. L'élément 4 est de préférence une boîte de vitesses lubrifiée avec l'huile.

Comme illustré sur la figure 2, le groupe motopropulseur 2 comprend encore un premier circuit 10 comprenant un liquide de refroidissement. Le groupe motopropulseur 2 comprend encore une pompe électrique 11 agencée dans le premier circuit 10. La pompe électrique 11 est destinée à faire circuler le liquide de refroidissement pour le refroidissement du composant 3.

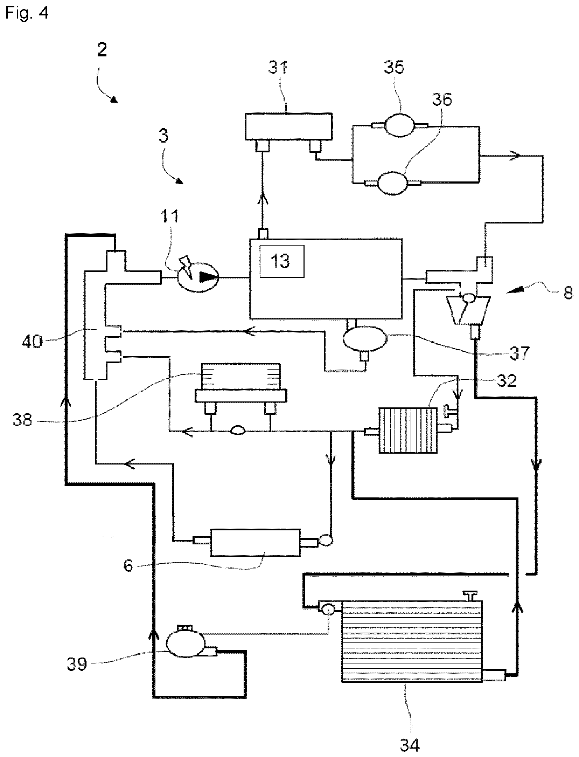

Comme illustré sur la figure 4, le groupe motopropulseur 2 comprend encore au moins un organe du composant 3 au sein duquel le liquide de refroidissement peut, le cas échéant, circuler. L'organe comprend par exemple au moins un échangeur thermique 6, 31, 32, 34, 38, et/ou une vanne EGR 35, et/ou un turbocompresseur 36 et/ou un volet d'admission 37 et/ou un thermostat 8 et/ou une deuxième machine électrique et/ou un bocal d'expansion 39.

Le groupe motopropulseur 2 comprend encore un moyen de mesure 13 de la température du liquide de refroidissement ou du composant 3, de préférence agencé au niveau du composant 3.

Le groupe motopropulseur 2 comprend encore un deuxième circuit 20 comprenant l'huile de lubrification de l'élément 4.

Le groupe motopropulseur 2 comprend encore un moyen de mesure 21 de la température de l'élément 4 ou de l'huile au niveau de l'élément 4. Le moyen de mesure 21 est par exemple un capteur ou une sonde destinée à mesurer la température de l'huile directement, de préférence en étant au contact de l'huile, ou de l'élément 4 en étant au contact par exemple de l'élément 4.

De préférence, le deuxième circuit 20 comprenant l'huile est agencé de sorte que la circulation du liquide de refroidissement dans le premier circuit 10 assure un réchauffage de l'élément 4 comme il sera expliqué par la suite.

Le groupe motopropulseur 2 comprend encore des moyens matériels et/ou logiciels 5 de gestion du fonctionnement de la pompe électrique 11 afin d'assurer un réchauffage de l'élément 4 dans au moins certaines situations de fonctionnement. Cette gestion comprend de préférence la mise en rotation et/ou l'arrêt et/ou la gestion de la vitesse de rotation de la pompe électrique 11 en tenant compte du besoin en débit de liquide de refroidissement de chacun des organes selon la température mesurée du liquide de refroidissement, par exemple afin d'assurer un réchauffage de l'élément 4. Les moyens matériels et/ou logiciels 5 sont connectés, par une liaison filaire ou sans fil, à la pompe électrique 11 et au moyen de mesure 21 de sorte à permettre la transmission d'informations.

Avantageusement, le groupe motopropulseur 2 comprend l'organe de type échangeur 6 entre le premier circuit 10 et le deuxième circuit 20. Avantageusement, le premier circuit 10 comprend une vanne 12 agencée au niveau de l'échangeur 6. Ainsi, en activant la vanne 12 vers une position de fermeture, on empêche la circulation du liquide de refroidissement dans l'échangeur 6. Au contraire, en activant la vanne 12 vers une position d'ouverture, on permet la circulation du liquide de refroidissement dans l'échangeur 6.

Les moyens matériels et/ou logiciels 5 de gestion du fonctionnement de la pompe électrique 11 comprennent de préférence un calculateur et/ou une unité de commande électronique ECU 7. Pour rappel, la pompe électrique 11 assure la circulation du liquide de refroidissement. Ainsi, les organes et/ou parties du moteur 3 dotés d'un circuit de refroidissement utilisant le liquide de refroidissement reçoivent également le liquide de refroidissement refoulé par la pompe 11. Par exemple, ces organes et/ou parties recevant du liquide de refroidissement, notamment illustrés sur la figure 4, comprennent tout ou partie des éléments suivants :
- le moteur à combustion interne 3,
- un échangeur 31 pour les gaz d'échappement en recirculation EGR (pour Exhaust Gaz Recirculation en termes anglo-saxons),
- la vanne EGR 35,
- le turbocompresseur 36 ou un palier de guidage d'un turbocompresseur,
- un aérotherme 32, notamment destiné au chauffage de l'habitacle,
- le volet d'admission 37 du moteur à combustion interne 3,
- le thermostat 8,
- un décanteur,
- la deuxième machine électrique, notamment de type alterno démarreur connue sous l'abréviation anglo-saxonne BSG,
- un échangeur 38 liquide de refroidissement / huile de lubrification du moteur 3,
- un radiateur 34, notamment haute température, liquide de refroidissement / air,
- le bocal d'expansion 39,
- un boîtier d'entrée de liquide de refroidissement 40,
- l'échangeur 6, liquide de refroidissement / huile de lubrification de boîte de vitesses, destiné à réchauffer ou refroidir l'huile pour la boîte de vitesses 4.

Par exemple, comme illustré sur la figure 4, la pompe électrique 11 est agencée en amont du composant 3. De préférence, en aval du composant 3, le thermostat 8 est agencé de sorte à permettre de diriger le liquide de refroidissement soit dans une boucle basse température, soit dans une boucle haute température, selon la température détectée par le thermostat 8.

Plus précisément, dans un premier temps, le calculateur 7 estime pour chaque organe, notamment chaque organe 6, 31, 32, 34, le débit de liquide de refroidissement qui lui est nécessaire. En fonction de la configuration du circuit, notamment de la position du thermostat 8 vers la boucle basse température ou vers la boucle haute température, le calculateur 7 transpose le débit de liquide de refroidissement de type liquide caloporteur pour chaque organe, en débit de liquide de refroidissement à fournir au circuit de refroidissement par la pompe électrique 11. Le calculateur 7 en déduit, ou calcule, le débit minimum pour satisfaire tous les organes. A partir du débit minimum déterminé, le calculateur déduit le régime de rotation, ou vitesse de rotation, de la pompe électrique 11 pour obtenir un tel débit. Enfin, ce régime de rotation est envoyé comme consigne à la pompe électrique 11.

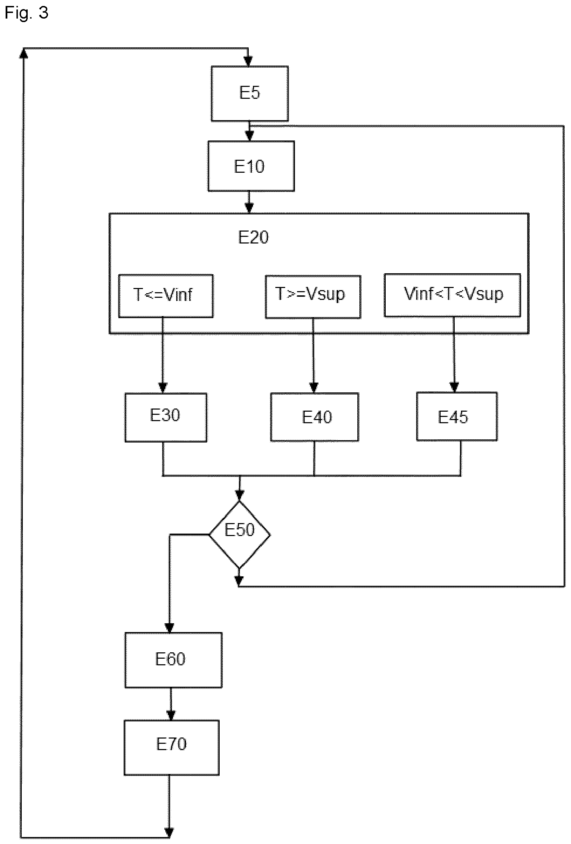

Comme illustré sur la figure 3, un procédé de pilotage de la pompe électrique 11 va maintenant être décrit selon un mode d'exécution.

Dans un premier temps, on démarre le groupe motopropulseur 2. Autrement dit, dans une étape E5, on active le composant 3 produisant de la chaleur. Pour rappel, de préférence, le composant 3 est un moteur thermique.

On passe à une étape E10 de mesure d'une température T. Cette température T est la température mesurée par le biais du moyen de mesure 21 de l'huile dans le deuxième circuit 20, ou de l'huile au niveau de l'élément 4, ou de l'élément 4 directement. Pour rappel, l'élément 4 est par exemple une boîte de vitesses.

On passe à une étape E20 de comparaison de la température mesurée T par rapport à une plage cible de température de fonctionnement optimal de l'élément 4. A noter que la plage cible est préalablement définie. La plage cible comprend une valeur seuil inférieure Vinf et une valeur seuil supérieure Vsup.

Suite à la comparaison de l'étape E20, en cas de température mesurée T inférieure ou égale à la valeur seuil inférieure Vinf, on passe à une étape E30. Dans cette étape E30, on active la pompe électrique 11 pour réchauffer l'élément 4. De préférence, l'activation de l'étape E30 de la pompe électrique se fait à un premier débit. Par exemple, le premier débit est compris entre 150 l/h et 250 l/h au niveau du composant 3.

Suite à la comparaison de l'étape E20, en cas de température mesurée T supérieure ou égale à la valeur seuil supérieure Vsup, on passe à une étape E40. Dans cette étape E40, on active la pompe électrique 11 pour refroidir l'élément 4. De préférence, l'activation de l'étape E40 de la pompe électrique se fait à un deuxième débit. Par exemple, le deuxième débit est compris entre 1100 l/h et 1300 l/h au niveau du composant 3.

Suite à la comparaison de l'étape E20, en cas de température mesurée T comprise entre la valeur seuil inférieure Vinf et la valeur seuil supérieure Vsup, on passe à une étape E45 dans laquelle on maintient ou on arrête la circulation du liquide de refroidissement dans une branche de circuit permettant de gérer la température de l'élément 4.

Suite à l'étape E30 ou E40 ou E45, on passe à une étape de temporisation E50.

A la fin du temps prédéfini de temporisation, on reboucle sur l'étape E10 de mesure de la température T.

Alternativement, l'étape E30 peut être conditionnée à l'atteinte d'une valeur prédéterminée de température du composant 3 et/ou du liquide de refroidissement du composant 3 (phase de montée en température du moteur thermique). A titre d'exemple, en deçà de 40 degrés Celsius, la pompe électrique est désactivée, de sorte que l'écoulement du liquide de refroidissement dans le circuit est à débit nul quel que soit le besoin de refroidissement des organes. Un tel retard à l'activation de la pompe à eau électrique permet une accélération de la montée en température de la chambre de combustion, afin de limiter les émissions de particules, priorité étant ainsi donnée au traitement des polluants par le moteur lui-même.

Alternativement, en cours d'écoulement du temps d'attente prédéfini de l'étape de temporisation E50, le composant ou moteur 3 est arrêté ou désactivé. Autrement dit, on passe à l'étape E60 d'arrêt du composant 3.

Par exemple, l'étape E60 d'arrêt du composant 3 fait passer immédiatement, ou sensiblement immédiatement, à l'étape E70 de désactivation ou arrêt de la pompe électrique 11.

Alternativement, suite à l'étape E60 de désactivation du composant 3, on maintient le fonctionnement de la pompe électrique 11 pendant une durée prédéterminée par exemple (alternative non illustrée). Autrement dit, une temporisation est prévue avant l'étape E70 de désactivation de la pompe électrique 11.

Alternativement encore, suite à l'étape E60 de désactivation du composant 3, on active la pompe électrique, notamment au deuxième débit de sorte à continuer le refroidissement de l'élément 4 (alternative non illustrée).

En résumé, la solution permet une stratégie de pilotage du thermo-management de l'élément 4, de préférence de type transmission et/ou boîte de vitesses, de sorte à maintenir l'huile dans la plage de température cible lui conférant un haut pouvoir de lubrification.

Plus précisément, la chaleur du moteur ou composant 3 contribue à la montée en température de la boîte de vitesses en phase de démarrage du moteur, voire du véhicule. Ainsi, les calories dissipées au niveau du moteur sont rapidement en partie transférées depuis le liquide de refroidissement (fluide caloporteur) du premier circuit 10 vers l'huile du deuxième circuit 20 par le biais de l'échangeur 6, notamment de type liquide de refroidissement/huile. Grâce à la solution, lors d'une phase de démarrage, la température de l'huile de la boîte de vitesses est réchauffée en étant par exemple augmentée de l'ordre de 25 degrés Celsius. Cela concourt à entrer davantage rapidement dans la plage cible de températures de fonctionnement. Cette augmentation permet de passer par exemple de 47 degrés (sans l'échangeur 6) à 72 degrés (avec l'échangeur 6) après 30 minutes de roulage par exemple. De préférence, la plage cible se situe par exemple entre 60 degrés et 100 degrés.

Lorsque le composant ou moteur 3 est en charge, notamment à forte charge, l'huile de la boîte de vitesses 4 et par conséquent la structure de la boîte de vitesses sont chaudes. Ces calories provenant de l'huile et/ou de la boîte de vitesses sont en partie transférées depuis l'huile du deuxième circuit 20 vers le liquide de refroidissement du premier circuit 10 par le biais de l'échangeur 6. Ainsi, les calories sont notamment évacuées par le radiateur haute température 34 agencé dans le premier circuit 10. On améliore ainsi la fiabilité de la boîte de vitesses par la réduction de la température de la boîte de vitesses et/ou de la température de l'huile. Par exemple, à vitesse maximale du véhicule, la solution permet d'abaisser la température de l'huile de la boîte de vitesses d'environ 20 degrés. Cette diminution permet par exemple de passer de 130 degrés à 110 degrés, c'est-à-dire, à quelques degrés de la plage cible de fonctionnement optimal de la boîte de vitesses.

Grâce à la solution, l'huile contenue dans la boîte de vitesses et la structure de la boîte de vitesses demeurent majoritairement à des températures comprises dans la plage cible de température optimal au cours du fonctionnement de la boîte de vitesses 4. Le rendement de la boîte de vitesses est alors amélioré, en particulier par un maintien plus long de fonctionnement dans la plage comprise entre 60 degrés et 90 degrés par exemple. Autrement dit, l'inconvénient d'une huile visqueuse à température basse créant une perte de rendement de la boîte de vitesses est évité grâce au réchauffage de l'huile de la boîte de vitesse de l'étape E30. En effet, le réchauffage pour atteindre rapidement la valeur de température seuil inférieure Vinf évite un fonctionnement long avec de l'huile visqueuse qui engendre des frottements excessifs, notamment au niveau des dentures de pignons. En conséquence, on évite une surconsommation du véhicule en termes d'électricité et/ou de carburant au cours du démarrage du composant 3.

A haut régime et/ou dans des conditions de température extérieure élevée, la température de l'huile est limitée par exemple aux alentours de 100 degrés. Notamment, les films d'huile entre les dentures des pignons engrenant ensemble dans la boîte de vitesses sont alors suffisamment épais pour lubrifier les dentures de manière optimale. On évite ainsi une usure prématurée des dentures des pignons, on limite le niveau sonore de la boîte de vitesses, et on évite des dysfonctionnements ainsi qu'une détérioration à termes de la boîte de vitesses pouvant en découler. Ainsi, la tenue des dentures n'est pas impactée dans le temps. En résumé, on maximise la fiabilité de la boîte de vitesse en refroidissant (étape E40) l'huile de la boîte de vitesses pour qu'elle ne dépasse pas, ou peu, la valeur seuil de température supérieure Vsup.

Comme évoqué précédemment, la solution permet d'utiliser les calories « en trop » provenant d'un autre organe du véhicule et destinées à être évacuées à l'extérieur par le radiateur 34 notamment. Ces calories « en trop » sont récupérées pour réchauffer l'huile de la boîte de vitesse. Grâce à un pilotage précis de la pompe électrique 11 notamment, on réchauffe à froid pour améliorer le rendement de la boîte de vitesses et on refroidit à chaud de sorte à ne pas dépasser une température critique et limiter ainsi l'usure de la boîte de vitesses dans ces conditions difficiles de fonctionnement. En effet, pour rappel, le circuit de refroidissement (premier circuit 10) est équipé de la pompe à eau électrique 11 dont le pilotage est géré par le calculateur 7 selon les différents besoins de refroidissement de chaque organe. Une fois que le besoin de chaque organe en refroidissement est défini, celui-ci est transposé en quantité ou débit de fluide caloporteur. De préférence, chaque besoin est établi à partir d'au moins un paramètre (par exemple la température d'huile de la boîte de vitesses) dont la valeur est comparée à au moins une table ou cartographie. Par exemple, trois cartographies sont prévues pour le moteur 3, et/ou trois cartographies sont prévues pour l'échangeur EGR 31 et/ou trois cartographies sont prévues pour l'échangeur 6.

Chacune des cartographies est sélectionnée selon la température d'eau moteur mesurée et comparée à une plage de températures. A titre d'exemple, une première plage de températures est inférieure à une valeur T1, une seconde plage de températures est comprise entre la valeur T1 et une valeur T2, et une troisième plage de températures est supérieure à une valeur T3, sachant que T1 < T2 < T3, de telle sorte que chaque cartographie correspond à une plage de températures.

Afin d'assurer la fiabilité de fonctionnement de chacun des organes à réguler thermiquement par la mise en marche de la pompe électrique, le fonctionnement piloté de cette dernière tient compte de l'ensemble des besoins en refroidissement définit organe par organe selon au moins une cartographie prédéterminée de besoins en débit de liquide de refroidissement Préférentiellement, chaque organe est associé à plusieurs cartographies, le choix de l'une des cartographies étant établi selon la température de liquide de refroidissement du moteur et/ou du moteur 3.

Pour rappel, la boîte de vitesses et/ou l'huile de la boîte de vitesses est thermo gérée en étant chauffée durant la phase de montée en température jusqu'à son point nominal de fonctionnement, notamment jusqu'à la valeur seuil inférieure Vinf, et en étant refroidie en cas de dépassement de la valeur seuil supérieure Vsup.

Pour cela le transfert de calories du liquide de refroidissement vers l'échangeur 6 de boîte de vitesses se fait selon un premier besoin de refroidissement, lequel est transposé en une valeur de débit et donc de vitesse de rotation de la pompe électrique pour assurer la phase ou étape de réchauffage E30 de la boîte de vitesses, par exemple avec une consigne de premier débit de l'ordre de 200 L/h. Le transfert de calories depuis l'échangeur 6 vers le radiateur haute température 34 se fait selon un deuxième besoin de refroidissement, lequel est transposé en une valeur de débit et donc de vitesse de rotation de la pompe électrique pour assurer la phase ou étape de refroidissement E40 de la boîte de vitesses, par exemple avec une consigne de deuxième débit de l'ordre de 1400 L/h.

De préférence, le deuxième débit est supérieur au premier débit.

Autrement dit, le calculateur 7 pilote la pompe électrique 11 en recevant en simultané la totalité des besoins en refroidissement de chacun des organes et en se basant sur le besoin le plus élevé ou sur le total des besoins.

En complément, d'autres organes peuvent être associés à la boîte de vitesses, par exemple une machine électrique contenue dans le carter de la boîte de vitesses.

Ainsi, outre le gain en rendement de la boîte de vitesses via le réchauffage, la tenue mécanique est accrue, notamment la fiabilité en endurance, via le refroidissement de l'huile. L'invention permet d'allier donc un gain de performance énergétique et une fiabilité améliorée avec une même architecture du groupe motopropulseur.

La solution est simple et peu onéreuse. En effet, elle ne nécessite ni clapet supplémentaire, ni capteur supplémentaire, ce qui la rend fiable et exempte d'entretien.

A noter que de préférence, chaque conduit alimentant en liquide de refroidissement chaque organe et/ou chaque circuit interne de chaque organe comprend un ajutage adapté de sorte à obtenir le débit recherché pour chaque organe. Pour rappel, la pompe électrique est activée de préférence en prenant en considération le besoin de refroidissement de l'ensemble des organes, quitte à faire circuler le liquide de refroidissement au niveau d'organes n'ayant pas besoin de refroidissement.

En complément, l'échangeur 6 de type eau/huile peut être à forte capacité, par exemple apte à échanger de l'ordre de 2000W pour 25 degrés d'écart de température entre les fluides.

En complément, le débit de la pompe à huile peut être modifié de sorte à passer d'une capacité de débit de l'ordre de 1l/min à un débit de l'ordre de 4 l/min par exemple, notamment en utilisant une pompe spécifique.

En outre, le pilotage de la pompe à huile pour l'huile de la boîte de vitesses peut être adapté à la solution.

En remarque, la solution selon l'invention atteint donc l'objectif recherché de fiabiliser une boîte de vitesses et présente les avantages suivants :
- elle est économique,
- elle peut être utilisée sur toutes les gammes de véhicules comportant une boîte de vitesses ayant un système de refroidissement, notamment les boîtes de vitesses dites automatiques et/ou destinée aux véhicules hybrides ou hybrides rechargeables, voire aux véhicules électriques,
- elle peut être adaptée sur d'autres véhicules, tels que des poids lourds, voire d'autres moyens de transport tel que des trains.

## Revendications

1. Procédé de pilotage d'une pompe électrique (11) d'un groupe motopropulseur (2) pour véhicule (1) comprenant:
- un composant (3) produisant de la chaleur, le composant (3) étant un moteur thermique ou une première machine électrique,
- un premier circuit (10) comprenant un liquide de refroidissement,
- une pompe électrique (11) agencée dans le premier circuit (10) et étant destinée à faire circuler le liquide de refroidissement pour le refroidissement du composant (3),
- au moins un organe du composant (3) au travers duquel le liquide de refroidissement est apte à circuler, ledit organe comprenant au moins un échangeur thermique (6, 31, 32, 34, 38) et/ou une vanne EGR (35), et/ou un turbocompresseur (36) et/ou un volet d'admission (37) et/ou un thermostat (8) et/ou une deuxième machine électrique et/ou un bocal d'expansion (39),
- un élément (4) fonctionnant avec de l'huile, l'élément (4) étant une boîte de vitesses,
- un moyen de mesure (13) de la température du liquide de refroidissement, notamment au niveau du composant (3),
- un deuxième circuit (20) comprenant l'huile,
- un moyen de mesure (21) de la température de l'élément (4) ou de l'huile au niveau de l'élément (4),
le groupe motopropulseur (2) comprenant des moyens matériels et/ou logiciels (5) de gestion du fonctionnement de la pompe électrique (11), qui gèrent sa mise en rotation et son arrêt et sa vitesse de rotation, tenant compte du besoin en débit de liquide de refroidissement de chacun des organes selon la température mesurée du liquide de refroidissement, afin d'assurer un réchauffage de l'élément (4), **caractérisé en ce que** le procédé comprend :
- une étape (E30) d'activation de la pompe électrique (11) pour réchauffer l'élément (4),
- une étape (E40) d'activation de la pompe électrique (11) pour refroidir l'élément (4),
- une étape de mesure (E10) de la température (T) de l'élément (4), notamment de l'huile, par le moyen de mesure (21),
- une étape de comparaison (E20) de la température (T) de l'élément (4), notamment de l'huile, par rapport à une plage cible de températures, et
en cas de température (T) inférieure ou égale à une valeur seuil inférieure (Vinf) de la plage cible de températures, on met en œuvre l'étape (E30) d'activation de la pompe électrique (11) pour réchauffer l'élément (4),
en cas de température (T) supérieure ou égale à une valeur seuil supérieure (Vsup) de la plage cible de températures, on met en œuvre l'étape (E40) d'activation de la pompe électrique (11) pour refroidir l'élément (4),
dans lequel l'étape (E30) d'activation de la pompe électrique (11) pour réchauffer l'élément (4) comprend une activation à un premier débit de la pompe électrique (11), notamment un premier débit compris entre 150 l/h et 250 l/h,
et dans lequel l'étape (E40) d'activation de la pompe électrique (11) pour refroidir l'élément (4) comprend une activation à un deuxième débit de la pompe électrique (11), notamment un deuxième débit compris entre 1100 l/h et 1300 l/h, le deuxième débit étant supérieur au premier débit.

2. Procédé selon la revendication 1, **caractérisé en ce que** la pompe électrique (11) est maintenue activée ou est activée alors que le composant (3) produisant de la chaleur est désactivé.

3. Procédé selon l'une des revendications 1 à 2, **caractérisé en ce que** durant la phase de montée en température du composant (3), l'étape (E30) d'activation de la pompe électrique (11) pour réchauffer l'élément (4) est conditionnée à l'atteinte d'une température seuil prédéterminée, notamment une température seuil du liquide de refroidissement du composant (3) supérieure ou égale à 40 degrés Celsius.

4. Procédé selon l'une des revendications 1 à 3, **caractérisé en ce que** le groupe motopropulseur (2) comprend un échangeur (6) entre le premier circuit (10) et le deuxième circuit (20).

5. Procédé selon la revendication précédente, **caractérisé en ce que** le premier circuit (10) comprend une vanne (12) agencée au niveau de l'échangeur (6) de sorte à empêcher ou non la circulation du liquide de refroidissement dans l'échangeur (6).

## Patentansprüche

1. Verfahren zum Steuern einer elektrischen Pumpe (11) eines Antriebsstrangs (2) für ein Fahrzeug, das Folgendes umfasst:
- ein wärmeerzeugendes Bauteil (3), wobei das Bauteil (3) ein Verbrennungsmotor oder eine erste elektrische Maschine ist,
- einen ersten Kreislauf (10) ein Kühlmittel umfassend,
- eine elektrische Pumpe (11), die im ersten Kreislauf (10) angeordnet ist und dazu dient, das Kühlmittel zur Kühlung des Bauteils (3) zirkulieren zu lassen,
- mindestens ein Organ des Bauteils (3), durch das das Kühlmittel zirkulieren kann, wobei das Bauteil mindestens einen Wärmetauscher (6, 31, 32, 34, 38) und/oder ein EGR-Ventil (35) und/oder einen Turbolader (36) und/oder eine Einlassklappe (37) und/oder einen Thermostat (8) und/oder eine zweite elektrische Maschine und/oder ein Ausdehnungsgefäß (39) umfasst,
- ein mit Öl verwendendes Element (4), wobei das Element (4) ein Getriebe ist,
- ein Mittel (13) zum Messen der Temperatur des Kühlmittels, insbesondere im Bereich des Bauteils (3),
- einen zweiten Kreislauf (20) Öl umfassend,
- ein Mittel (21) zum Messen der Temperatur des Elements (4) oder des Öls im Bereich des Elements (4),
wobei der Antriebsstrang (2) Hardware- und/oder Softwaremittel (5) zum Steuern des Betriebs der elektrischen Pumpe (11) umfasst, die ihr Ingangsetzen und Anhalten sowie ihre Drehzahl unter Berücksichtigung des Kühlmittelflussbedarfs jedes der Organe in Abhängigkeit von der gemessenen Temperatur des Kühlmittels steuern, um eine Erwärmung des Elements (4) zu gewährleisten, **dadurch gekennzeichnet, dass** das Verfahren umfasst:
- einen Schritt (E30) zum Aktivieren der elektrischen Pumpe (11), um das Element (4) zu erwärmen,
- einen Schritt (E40) zum Aktivieren der elektrischen Pumpe (11), um das Element (4) zu kühlen,
- einen Schritt (E10) zum Messen der Temperatur (T) des Elements (4), insbesondere des Öls, durch das Mittel (21) zum Messen,
- einen Schritt (E20) des Vergleichs der Temperatur (T) des Elements (4), insbesondere des Öls, mit einem Zieltemperaturbereich, und
falls die Temperatur (T) kleiner oder gleich einem unteren Schwellenwert (Vinf) des Zieltemperaturbereichs ist, wird der Schritt (E30) des Aktivierens der elektrischen Pumpe (11) durchgeführt, um das Element (4) zu erwärmen,
falls die Temperatur (T) größer oder gleich einem oberen Schwellenwert (Vsup) des Zieltemperaturbereichs ist, wird der Schritt (E40) des Aktivierens der elektrischen Pumpe (11) durchgeführt, um das Element (4) zu kühlen,
wobei der Schritt (E30) des Aktivierens der elektrischen Pumpe (11) zum Erwärmen des Elements (4) ein Aktivieren der elektrischen Pumpe (11) bei einer ersten Durchflussmenge umfasst, insbesondere eine erste Durchflussmenge zwischen 150 l/h und 250 l/h,
und wobei der Schritt (E40) des Aktivierens der elektrischen Pumpe (11) zum Kühlen des Elements (4) ein Aktivieren der elektrischen Pumpe (11) bei einer zweiten Durchflussmenge umfasst, insbesondere einen zweiten Durchfluss zwischen 1100 l/h und 1300 l/h, wobei der zweite Durchfluss größer als der erste Durchfluss ist.

2. Verfahren nach Anspruch 1, **dadurch gekennzeichnet, dass** die elektrische Pumpe (11) eingeschaltet gehalten oder eingeschaltet wird, während das wärmeerzeugende Bauteil (3) ausgeschaltet ist.

3. Verfahren nach einem der Ansprüche 1 bis 2, **dadurch gekennzeichnet, dass** während der Phase des Temperaturanstiegs des Bauteils (3) der Schritt (E30) des Aktivierens der elektrischen Pumpe (11) zum Erwärmen des Elements (4) vom Erreichen einer vorbestimmten Schwellentemperatur abhängig ist, insbesondere einer Schwellentemperatur des Kühlmittels des Bauteils (3) von mindestens 40 Grad Celsius.

4. Verfahren nach einem der Ansprüche 1 bis 3, **dadurch gekennzeichnet, dass** der Antriebsstrang (2) einen Wärmetauscher (6) zwischen dem ersten Kreislauf (10) und dem zweiten Kreislauf (20) umfasst.

5. Verfahren nach dem vorhergehenden Anspruch, **dadurch gekennzeichnet, dass** der erste Kreislauf (10) ein Ventil (12) umfasst, das auf Höhe des Wärmetauschers (6) angeordnet ist, um die Zirkulation des Kühlmittels im Wärmetauscher (6) zu verhindern oder zuzulassen.

## Claims

1. Method for controlling an electric pump (11) for a vehicle (1) powertrain (2), comprising:
- a heat-producing component (3), the component (3) being a heat engine or a first electric machine,
- a first circuit (10) comprising a coolant,
- an electric pump (11) arranged in the first circuit (10) and intended to circulate the coolant for cooling the component (3),
- at least one member of the component (3) through which the coolant is able to circulate, said member comprising at least one heat exchanger (6, 31, 32, 34, 38) and/or an EGR valve (35), and/or a turbocharger (36) and/or an inlet flap (37) and/or a thermostat (8) and/or a second electrical machine and/or an expansion jar (39),
- an element (4) operating with oil, the element (4) being a gearbox,
- a means (13) for measuring the temperature of the coolant, in particular at the component (3),
- a second circuit (20) comprising the oil,
- a means (21) for measuring the temperature of the element (4) or of the oil at the element (4),
the powertrain (2) comprising hardware and/or software means (5) for managing the operation of the electric pump (11), which manage its rotation and its stopping and its speed of rotation, taking into account the need for flow of coolant of each of the members according to the measured temperature of the coolant, in order to ensure a heating of the element (4), **characterised in that** the method comprises:
- a step (E30) of activating the electric pump (11) to heat the element (4),
- a step (E40) of activating the electric pump (11) to cool the element (4),
- a step (E10) of measuring the temperature (T) of the element (4), in particular of the oil, by the measuring means (21),
- a step of comparing (E20) the temperature (T) of the element (4), in particular of the oil, with a target range of temperatures, and
in the event of a temperature (T) less than or equal to a lower threshold value (Vinf) of the target temperature range, the step (E30) of activating the electric pump (11) is implemented to heat the element (4),
in the event of a temperature (T) greater than or equal to an upper threshold value (Vsup) of the target temperature range, the step (E40) of activating the electric pump (11) is implemented to cool the element (4),
wherein the step (E30) of activating the electric pump (11) to heat the element (4) comprises an activation at a first flow rate of the electric pump (11), in particular a first flow rate of between 150 l/h and 250 l/h,
and wherein the step (E40) of activating the electric pump (11) to cool the element (4) comprises an activation at a second flow rate of the electric pump (11), in particular a second flow rate between 1100 l/h and 1300 l/h, the second flow rate being higher than the first flow rate.

2. Method according to claim 1, **characterised in that** the electric pump (11) is kept activated or is activated while the heat-producing component (3) is deactivated.

3. Method according to one of claims 1 to 2, **characterised in that** during the phase of raising the temperature of the component (3), the step (E30) of activating the electric pump (11) to heat the element (4) is conditioned on reaching a predetermined threshold temperature, in particular a threshold temperature of the coolant of the component (3) greater than or equal to 40 degrees Celsius.

4. Method according to one of claims 1 to 3, **characterised in that** the powertrain (2) comprises an exchanger (6) between the first circuit (10) and the second circuit (20).

5. Method according to the preceding claim, **characterised in that** the first circuit (10) comprises a valve (12) arranged at the exchanger (6) so as to prevent or not the circulation of the coolant in the exchanger (6).
